# EUROPÄISCHE PATENTSCHRIFT

(11) **EP 0 767 522 B1**
(45) Veröffentlichungstag und Bekanntmachung des Hinweises auf die Patenterteilung: **23.06.1999**
(21) Anmeldenummer: 96115739.3
(22) Anmeldetag: 01.10.1996
(51) Int. Cl.: H02G 9/06, H02G 15/013, F16J 15/18, F16L 7/02

(54) **Dichtungseinsatz zum Abdichten von Kabeleinführungen**
Gasket for sealing cable entry
Joint d'étanchéité pour câble d'entrée

(30) Priorität: 04.10.1995 DE 19536979
(43) Veröffentlichungstag der Anmeldung: 09.04.1997
(73) Patentinhaber: RXS Kabelgarnituren Gesellschaft mit beschränkter Haftung, 58093 Hagen (DE)
(72) Erfinder: Fröhlich, Franz, Dipl.-Ing., 58091 Hagen (DE); Kluwe, Wolf, Dipl.-Ing., 58119 Hagen (DE); Meltsch, Hans-Jürgen, Dipl.-Ing., 58239 Schwerte (DE)
(74) Vertreter: Epping, Wilhelm, Dr.-Ing.

(56) Entgegenhaltungen:
- FR-A- 2 090 148
- FR-A- 2 549 651
- FR-A- 2 590 347
- FR-A- 2 593 578
- GB-A- 1 021 457

## Beschreibung

Die Erfindung betrifft einen Dichtungseinsatz aus elastischem Dichtungsmaterial mit austrennbaren Ringen zum Abdichten von Kabeleinführungen bei Kabelmuffen, wobei mehrere auf einer Seite mit um die Einführungsöffnungen konzentrisch verlaufenden Anpassungsprägungen versehene Dichtungsscheiben wechselseitig übereinander in der Einführungsöffnung der Kabelmuffe angeordnet sind und diese Dichtungsscheiben mittels Druckelementen so verformbar sind, daß sie dichtend gegen die Wandung der Einführungsöffnung der Kabelmuffe und gegen das eingeführte Kabel preßbar sind und wobei ein Radialschnitt in jeder Dichtungsscheibe angeordnet ist und daß die Radialschnitte der übereinanderliegenden Dichtungsscheiben gegeneinander versetzt sind.

Aus der EP 0 440 903-A1 ist ein Anpassungsdichtelement für den Abschluß einer Einführungsöffnung bei Kabelgarnituren bekannt, bei dem in der Abschlußwandung konzentrische, austrennbare Dichtungsringe eingeprägt sind. Diese Dichtungsringe werden je nach Kabeldurchmesser des einzuführenden Kabels ausgetrennt. Außerdem ist ein Radialschlitz im Einführungsbereich eingebracht, so daß der Einsatz dieses Anpassungdichtelements auch bei ungeschnittenen Kabeln möglich ist.

Aus FR-A-2 593 578, FR-A-2 590 347 und FR-A-2 549 651 sind Kabeleinführungen für jeweils ein Kabel bekannt, wobei die Abdichtung mit mehreren hintereinanderliegenden Dichtungsscheiben erfolgt. Die Dichtung wird dabei erreicht mit axial wirkenden Druckelementen, durch die eine Verformung der Dichtungsscheiben erfolgt. Zur Anpassung an den jeweiligen Durchmesser des einzuführenden Kabels werden konzentrische Ringe ausgeschnitten, die durch konzentrisch verlaufende Prägungen vorbestimmt sind. Die Dichtungsscheiben werden einzeln hintereinander eingelegt, wobei auf eine geprägte Seite eine ungeprägte folgt.

In FR-A-2 090 148 ist eine Dichtung für eine geteilte Muffe beschrieben, bei der die Längsdichtungen und Kabeleinführungsdichtungen als Gesamtrahmen zusammengefaßt sind. Jede Kabeleinführungsdichtung ist als Block ausgeführt und mit konzentrischen Prägungen zur Kabelanpassung versehen. Die Blöcke werden in Dichtungskammern eingesetzt und beim Zusammenfügen der Kabelmuffe verpreßt.

Aus GB-A-1 021 457 ist eine einzelne Dichtungsscheibe für Einzeleinführungen mit konzentrischen Prägungen auf beiden Seiten bekannt, wobei Radialschnitte zusätzlich vorgesehen sind.

Für vorliegende Erfindung stellt sich die Aufgabe, einen Dichtungseinsatz zu schaffen der ebenfalls an den Durchmesser des jeweils einzuführenden Kabels angepaßt und auch bei ungeschnittenen Kabeln eingesetzt werden kann, wobei die Dichtungsverhältnisse in den Bereichen der Einprägungen der konzentrischen Ringe und des Radialschlitzes wesentlich verbessert werden sollen. Die gestellte Aufgabe wird gemäß der Erfindung mit einem Dichtungseinsatz der eingangs erläuterten Art dadurch gelöst, daß zwei Dichtungsscheiben in gleicher Ebene über einen gemeinsamen Verbindungssteg zur Abdichtung einer Mehrfacheinführung für ungeschnittene Kabel zu einer Einheit miteinander verbunden sind, daß die Dichtungsscheiben durch Filmscharniere so miteinander verbunden sind, daß sich beim Zusammenfalten die wechselseitige Aufeinanderschichtung der Dichtungsscheiben ergibt.

Das Dichtungssystem gemäß der Erfindung besteht aus elastischen Scheibendichtungen, z.B. aus Silikon, und eignet sich sowohl für Abdichtungen bei Einzeleinführungen, wie auch bei Einführungen von mehreren Kabeln oder auch für Kabeleinführungen von ungeschnittenen Kabeln gleichermaßen. Für die Beschreibung der Erfindung wird ein Dichtungseinsatz für eine Abdichtung bei der Einführung eines ungeschnittenen Kabels herangezogen; denn bei Einzeleinführungen liegen die Verhältnisse eher einfacher, wie später aufgezeigt wird. Für die Abdichtung bei der Einführung von ungeschnittenen Kabeln muß bereits im Einführungsbereich der Kabelmuffe vorgesehen sein, daß das ungeschnittene Kabel problemlos durch den Einführungsbereich hindurch eingeführt werden kann. Dies wird in bekannter Weise dadurch gelöst, daß zwei Kabeleinführungsöffnungen über einen gemeinsamen Verbindungsschlitz miteinander verbunden sind, durch den die Schlaufe des ungeschnittenen Kabels hindurchgeführt werden kann. So muß für die Abdichtung nicht nur die Abdichtung in den Kabeleinführungsöffnungen selbst, sondern auch im Verbindungsschlitz vorgenommen werden. Dies wird mit Hilfe von Dichtungen bewerkstelligt, die aus zwei ringförmigen Dichtungsscheiben bestehen, die über einen gemeinsamen Verbindungssteg miteinander verbunden sind, so daß sich der Dichtungseinsatz über beide Kabeleinführungsöffnungen und den gemeinsamen Verbindungsschlitz erstreckt. Um jedoch ungeschnittene Kabel auch durch die Dichtungseinsätze hindurch einführen zu können, müssen Radialschnitte in den beiden ringförmigen Dichtungsscheiben eingebracht werden, damit sie über die Kabel geführt werden können. Außerdem sind zur Anpassung konzentrische Anpassungsprägungen um die Einführungsöffnung herum vorgesehen. Hier liegen nun die Probleme, die durch die Erfindung gelöst werden sollen; denn entlang dieser Anpassungsprägungen und entlang der Radialschnitte bilden sich zwangsläufig Kanäle aus, die zu Undichtigkeiten führen können. Der Vorteil der Erfindung liegt nun darin, daß diese Gefahr beseitigt wird.

Die Abdichtung gemäß der Erfindung erfolgt mittels eines Dichtungspaketes, das aus mehreren übereinander angeordneten Dichtungsscheiben gebildet wird, wobei diese Dichtungsscheiben erstens wechselseitig und zweitens mit gegeneinander versetzten Radialschnitten übereinander gesetzt werden. Zusätzlich werden die konzentrischen Anpassungsprägungen in den Bereichen der Radialschnitte jeweils durch radiale Stege unterbrochen, so daß sich auch hier keine durchgehenden Kanäle bilden können. Zweckmäßigerweise werden die einzelnen Dichtungsscheiben bereits wechselseitig durch Filmscharniere miteinander verbunden, so daß sich beim Zusammenfalten der Dichtungsscheiben zum Dichtungspaket bereits zwangsläufig die abwechselnde Lage ergibt, wobei auch bereits eine Versetzung der übereinander liegenden Radialschnitte vorgegeben ist. Dadurch bildet sich auch kein durchgehender Radialschnitt über das ganze Dichtungspaket hinweg. Bei diesem Dichtungspaket liegt somit immer eine geprägte Fläche einer glatten Fläche gegenüber und bei der Verpressung des Dichtungspaketes mit Hilfe der Druckelemente können sich kaum Unregelmäßigkeiten in den Zwischenlagen ausbilden.

Die Erfindung wird nun im einzelnen durch ein Ausführungsbeispiel für eine Doppeleinführung eines ungeschnittenen Kabels anhand von fünf Figuren näher erläutert.
- Figur 1: zeigt eine einzelne Doppeldichtung aus zwei in einer Ebene mittels eines Verbindungssteges verbundenen Dichtungsscheiben.
- Figur 2: zeigt einen Querschnitt durch diese Doppeldichtung.
- Figur 3: zeigt ein aufgefaltetes Dichtungspaket.
- Figur 4: zeigt den Aufbau einer Kabeleinführungsdichtung in einer ersten erfindungsgemäßen Ausführung.
- Figur 5: zeigt den Aufbau einer Kabeleinführungsdichtung in einer zweiten erfindungsgemäßen Ausführung.

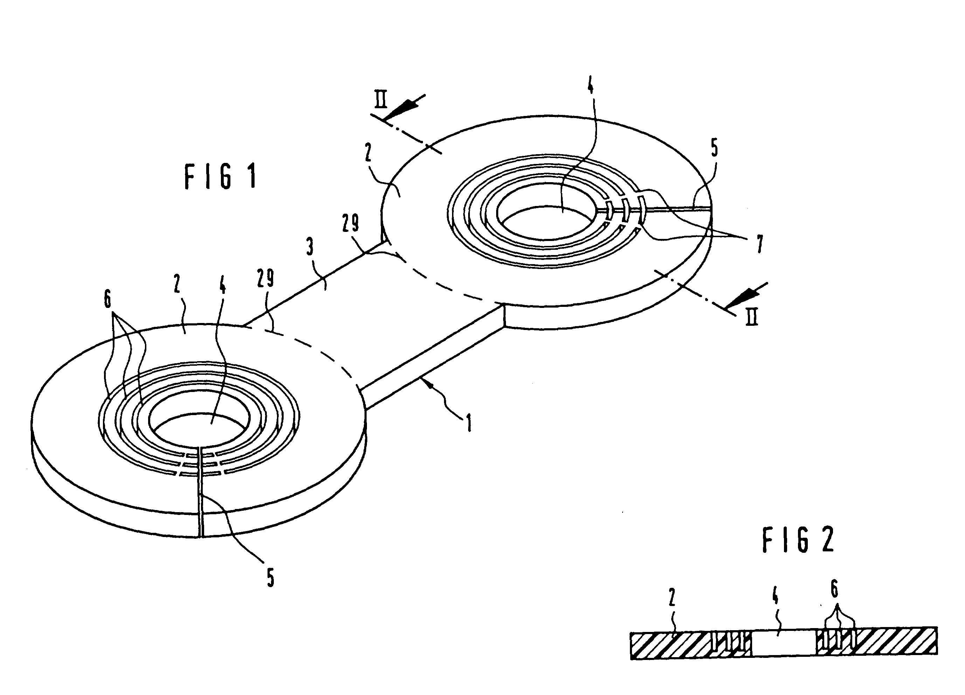

In Figur 1 wird eine Doppeldichtung 1 gezeigt, bei der im Prinzip zwei einzelne Dichtungsscheiben 2 über einen gemeinsamen Dichtungssteg 3 miteinander verbunden sind. Eine solche Doppeldichtung 1 wird in einer doppelten Kabeleinführungsöffnung für die Einführung eines ungeschnittenen Kabels verwendet, die durch zwei zylindrische Kabeleinführungsöffnungen und einen dazwischen liegenden Verbindungsschlitz gebildet wird. Im Prinzip kann das erfindungsgemäße Dichtungssystem jedoch auch bei Einzeleinführungen verwendet werden, wobei dann nur die Dichtungsscheiben 2, die hier in der Figur durch Punktierung ergänzend skizziert sind, übereinander in den Kabeleinführungsöffnungen der Kabelmuffe eingesetzt werden. Im folgenden werden jedoch nur die Doppeldichtungen 1 beschrieben, da hier die Problematik am deutlichsten in Erscheinung tritt. Die Doppeldichtung 1 aus den beiden über den gemeinsamen Verbindungssteg 3 zusammenhängenden Dichtungsscheiben 2 besitzt um jede Einführungsöffnung 4 herum mehrere konzentrisch verlaufende Anpassungsprägungen 6, die nicht über die gesamte Stärke der Dichtungsscheiben ausgeführt sind, so daß dünne Abschlüsse in den Nuten erhalten bleiben. Je nach Bedarf werden nun zur Anpassung an den jeweiligen Kabeldurchmesser entsprechende Ringe ausgetrennt, so daß auf diese Weise eine Reihe von Kabeldurchmessern mit einem einzigen Typ erfaßt werden. Doch dies allein ist im Prinzip nicht neu, wobei allerdings nur Einfachdichtungen bisher verwendet wurden, bei denen sich dann bei der Pressung entlang der Anpassungsprägungen kleine Kanäle ausbilden konnten, die zu Undichtigkeiten führten. Bei der Erfindung werden nun mehrere solcher Dichtungsscheiben 2, die entsprechend dünner sein können, wechselseitig übereinander angeordnet und zwar so, daß jeweils auf eine profilierte Fläche eine glatte Fläche folgt. Bei der Verpressung der Dichtungsscheiben 2 durch die Druckelemente erfolgt dann eine gleichmäßige und ausgleichende Anformung der gegenüberliegenden Flächen, so daß sich Kanäle nicht mehr ausbilden können. Außerdem sind die Radialschnitte 5 erkennbar, die ermöglichen, daß auch ungeschnittene Kabel in die Einführungsöffnungen 4 eingeführt werden können. Diese Radialschnitte 5 müssen nun jedoch durchgehend sein und bei einer Einzeldichtung würden auch hier wiederum Kanäle auftreten. Dies wird gemäß der Erfindung jedoch dadurch verhindert, daß die Radialschnitte 5 der übereinander liegenden Dichtungsscheiben 2 gegeneinander versetzt sind, so daß die einzelnen Radialschnitte 5 nicht übereinander liegen. Auf diese Weise wird ein durchgehender Radialschnitt vermieden. Im Bereich dieser Radialschnitte 5 sind nun auch die konzentrischen Anpassungsprägungen 6 durch radial verlaufende Stege 7 unterbrochen, so daß auch hier keine durchgehenden Verbindungskanäle zustandekommen können.

Die Figur 2 zeigt den in Figur 1 angegebenen Schnitt II - II, bei dem in erster Linie die Ausbildungen der Anpassungsprägungen 6 deutlich werden. Die Anpassungsprägungen 6 sind wie oben bereits erläutert nicht durchgehend, so daß dünne Restwandungen erhalten sind und ein dichter Abschluß gewährleistet ist. Die dünne Restwandung ermöglicht jedoch jeweils ein einfaches Austrennen der einzelnen Ringe zur Anpassung an den jeweiligen Kabeldurchmesser.

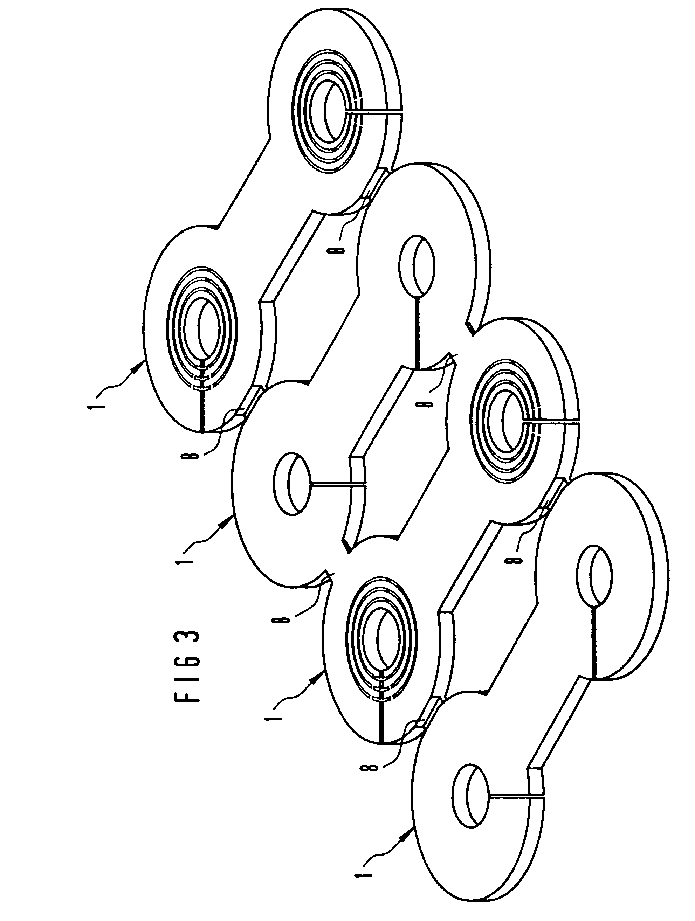

In Figur 3 sind nun mehrere einzelne Doppeldichtungen 1 aus jeweils zwei über den Verbindungssteg 3 zusammenhängende Dichtungsscheiben 2 zu einer Einheit zusammengefaßt und zwar so, daß beim Zusammenfalten dieser Doppeldichtungen 1 zwangsweise die richtige, wechselseitige Übereinanderschichtung entsteht. Hierfür sind Filmscharniere 8 vorgesehen, die so angeordnet sind, daß jeweils eine mit Anpassungsprägungen 6 versehene, profilierte Fläche einer Doppeldichtung 1 mit einer glatten Fläche der nächst-folgenden Doppeldichtung 1 zusammenkommt. Außerdem geht daraus hervor, daß bei dieser Zusammenfaltung zu einem Dichtungspaket die Radialschnitte 5 der übereinanderliegenden Doppeldichtungen 1 nicht übereinander zu liegen kommen. Dadurch kommt auch in diesem Bereich kein durchgehender Schnitt zustande.

Es ist auch möglich durch Abtrennung entlang der Filmscharniere 8 mehr oder weniger starke Dichtungspakete zusammenzustellen.

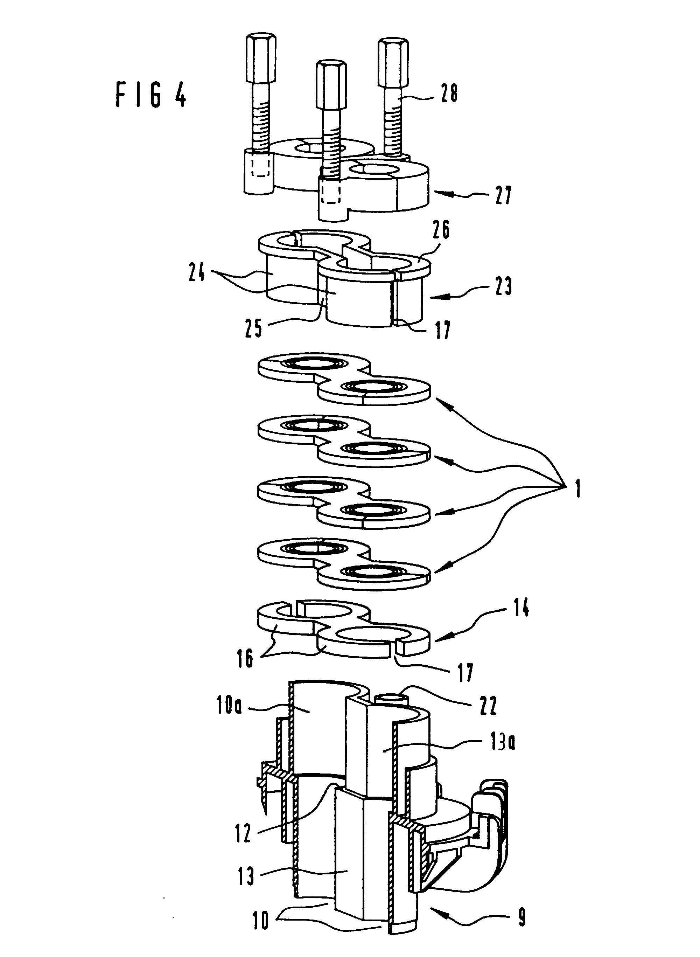

In Figur 4 wird der Zusammenbau einer doppelten Kabeleinführung einer Kabelmuffe 9 demonstriert. Der Muffenkopf der Kabelmuffe 9 enthält zwei Kabeleinführungsöffnungen 10, die über einen gemeinsamen offenen Verbingungsschlitz 13 miteinander verbunden sind. Dadurch ist es möglich, daß ungeschnittene Kabel in Bogenform eingeführt werden können. Innerhalb dieser Einführungsöffnungen 10 und des Verbindungsschlitzes 13 ist eine umlaufende Abstufung 12 vorgesehen, die zur Auflage des Dichtungspakets bzw. des Druckverteilelementes 14 dient. In den äußeren Bereichen 10a und 13a der Kabeleinführungsöffnungen 10 wird dann der Dichtungseinsatz aus den Doppeldichtungen 1 mit seinen Druckverteilelementen 14 und 23 eingesetzt. Bei diesem Ausführungsbeispiel wird als Druckelement eine Druckplatte 27 vorgesehen, die als Abschluß auf die Dichtungseinlage durch die in Gewindehülsen 22 eingreifenden Druckschrauben 28 auf den Muffenkopf aufgepreßt wird. Zur Abdichtung der Kabeleinführungsöffnungen wird zunächst ein inneres Druckverteilelement 14 aus zwei mit einem Steg miteinander verbundenen Auflageringen 16 eingelegt. Diese Auflageringe 16 besitzen ebenfalls Radialschnitte 17 zur Einführung ungeschnittener Kabel. Auf dieses Druckverteilelement 14 werden die Doppeldichtungen 1 in der bereits beschriebenen Weise aufeinander eingeführt. Den Abschluß bildet das äußere Druckverteilelement 23, das ebenfalls wieder mit Radialschnitten 17 in den Auflageringen 24 versehen ist. Auch diese Einzelringe 24 sind über einen gemeinsamen Steg 25 miteinander zu einer Einheit verbunden. Auf dem oberen Rand des Druckverteilelementes 23 ist ein umlaufender Rand als Anschlag 26 vorgesehen, durch den beim Aufpressen mittels der Druckplatte 27 eine Eindringbegrenzung gegeben ist.

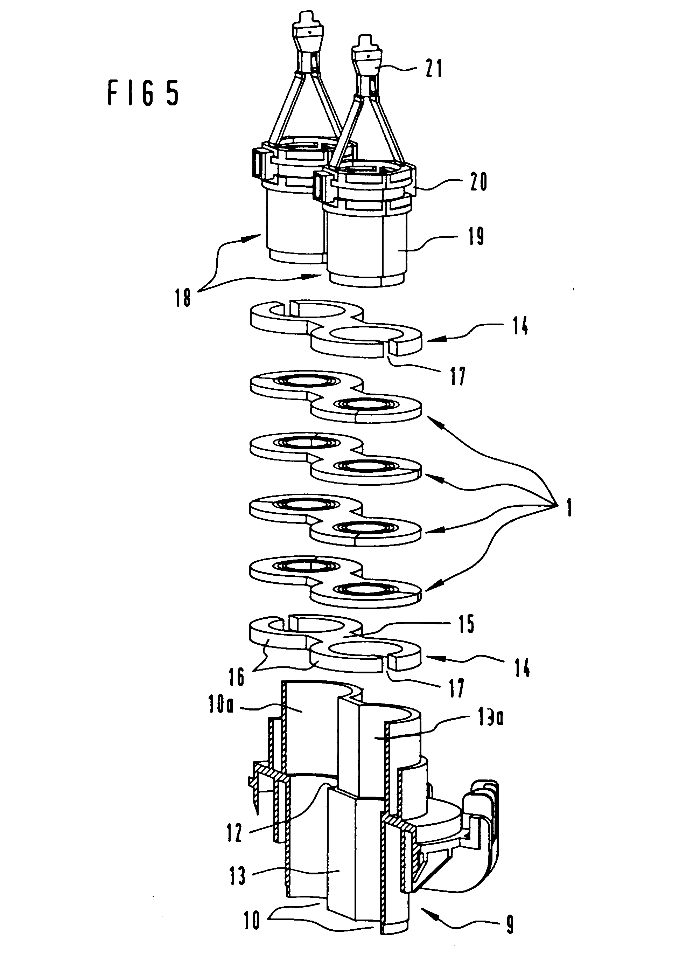

Das Ausführungsbeispiel nach Figur 5 unterscheidet sich gegenüber der in Figur 4 gezeigten Version lediglich dadurch, daß die Druckelemente 18 durch zylindrische Hülsen gebildet werden, die jeweils ein Außengewinde aufweisen, mit denen sie im Innengewinde der Kabeleinführungsöffnungen 10a pressend eingeschraubt werden. Die äußeren Druckverteilelemente 14 haben hier keine Anschläge, da sie von den Druckelementen 18 in die Kabeleinführungsöffnungen ebenfalls eingedrückt werden. Ein entsprechender Anschlag könnte an den Druckelementen 18 vorgesehen werden. Als Besonderheit ist hier noch gezeigt, daß die Druckelemente 18 mit Kabelabfangvorrichtungen 20 versehen sein können, die direkt auf den Kabelmantel der eingeführten Kabel eindringen und somit das eingeführte Kabel gegen Druck-, Zug- und Torsionsbelastungen sichert. Weiterhin ist an den Druckelementen 18 jeweils eine Fixiervorrichtung 21 für ein Zentralelement eines optischen Kabels angeordnet. Somit sind diese Abschlüsse auch für die Einführung optischer Kabel geeignet.

Vorzugsweise bestehen die Dichtungsscheiben 2 bzw. die Doppeldichtungen 1 aus elastischem Material, wie z.B. Silikon; doch ist in verschiedenen Anwendungsfällen sinnvoll die Dichtungsscheiben 2 bzw. die Doppeldichtungen zumindest teilweise aus plastischem Material herzustellen. Hierfür eignet sich beispielsweise ein plastisch/elastisches Butylgemisch. Die Dichtungswirkung kann weiterhin verbessert werden, wenn zumindest einzelne Dichtungsscheiben 2 bzw. Doppeldichtungen 1 aus elastischem Material mit plastischem Dichtungsmaterial oder einer Dichtpaste - wie sie in der Kabelgarniturentechnik bekannt sind - beschichtet sind.

## Patentansprüche

1. Dichtungseinsatz aus elastischem Dichtungsmaterial mit austrennbaren Ringen zum Abdichten von Kabeleinführungen bei Kabelmuffen, wobei mehrere auf einer Seite mit um die Einführungsöffnungen (4) konzentrisch verlaufenden Anpassungsprägungen (6) versehene Dichtungsscheiben (2) wechselseitig übereinander in der Einführungsöffnung (10) der Kabelmuffe (9) angeordnet sind und diese Dichtungsscheiben (2) mittels Druckelementen (18, 27) so verformbar sind, daß sie dichtend gegen die Wandung der Einführungsöffnung (10) der Kabelmuffe (9) und gegen das eingeführte Kabel preßbar sind und wobei ein Radialschnitt (5) in jeder Dichtungsscheibe (2) angeordnet ist und daß die Radialschnitte (5) der übereinanderliegenden Dichtungsscheiben (2) gegeneinander versetzt sind,
**dadurch gekennzeichnet,**
daß zwei Dichtungsscheiben (2) in gleicher Ebene über einen gemeinsamen Verbindungssteg (3) zur Abdichtung einer Mehrfacheinführung für ungeschnittene Kabel zu einer Einheit miteinander verbunden sind, daß die Dichtungsscheiben (2) durch Filmscharniere (8) so miteinander verbunden sind, daß sich beim Zusammenfalten die wechselseitige Aufeinanderschichtung der Dichtungsscheiben (2) ergibt.

2. Dichtungseinsatz nach Anspruch 1,
**dadurch gekennzeichnet,**
daß die konzentrischen Anpassungsprägungen (6) im Bereich und zu beiden Seiten des Radialschnittes (5) durch jeweils einen radialen Steg (7) unterbrochen sind.

3. Dichtungseinsatz nach einem der vorhergehenden Ansprüche,
**dadurch gekennzeichnet,**
daß die Dichtungsscheibe (2) mit einem Auflagering (16) auf einer umlaufenden Abstufung (12) innerhalb der Einführungsöffnung (10) der Kabelmuffe aufgesetzt ist, daß das aus mehreren übreinanderliegenden Dichtungsscheiben (2) bestehende Dichtungspaket mit Druckverteilelementen (14, 23) abgedeckt ist.

4. Dichtungseinsatz nach einem der vorhergehenden Ansprüche,
**dadurch gekennzeichnet,**
daß auf das mit dem Druckverteilelement (14) abgedeckte Dichtungspaket aus mehreren übereinanderliegenden Dichtungsscheiben (2) ein zylindrisches Druckelement (18), das vorzugsweise mit integrierten Kabelabfangelementen (20, 21) versehen ist, in dem mit Gewinde versehene äußeren Bereich (10a) der Kabeleinführungsöffnung (10) der Kabelmuffe (9) einschraubbar ist.

5. Dichtungseinsatz nach einem der Ansprüche 1 bis 3,
**dadurch gekennzeichnet,**
daß das aus mehreren übereinanderliegenden Dichtungsscheiben (2) bestehende Dichtungspaket mit einer auf das Druckverteilelement (21) einwirkenden Druckplatte (27) dichtend einpreßbar ist, wobei Schraubelemente (28) für die Druckerzeugung angeordnet sind.

6. Dichtungseinsatz nach Anspruch 5,
**dadurch gekennzeichnet,**
daß das Druckverteilelement (23) mit einem druckkraftbegrenzenden Anschlag (26) versehen ist.

7. Dichtungseinsatz nach einem der vorhergehenden Ansprüche,
**dadurch gekennzeichnet,**
daß die in die Kabeleinführungsöffnung (10) eingesetzten Auflageringe (16) der Druckverteilelemente (14, 23) Radialschnitte (17) aufweisen.

8. Dichtungseinsatz nach einem der vorhergehenden Ansprüche,
**dadurch gekennzeichnet,**
daß die Druckverteilelemente (14, 23) bei Doppeldichtungen (1) jeweils aus zwei Einzelringen (16, 24) und einem gemeinsamen Verbindungssteg (15, 25) gebildet sind.

9. Dichtungseinsatz nach einem der vorhergehenden Ansprüche,
**dadurch gekennzeichnet,**
daß die Dichtungsscheiben (2-3)aus elastischem Material, vorzugsweise aus Silicon, gebildet sind.

10. Dichtungseinsatz nach einem der Ansprüche 1 - 8,
**dadurch gekennzeichnet,**
daß die Dichtungsscheiben (2) teilweise aus plastischem Material, vorzugsweise aus plastisch/elastischem Butylgemisch gebildet sind.

11. Dichtungseinsatz nach einem der vorhergehenden Ansprüche,
**dadurch gekennzeichnet,**
daß einzelne elastische Dichtscheiben mit plastischem Dichtmaterial beschichtet sind.

## Claims

1. Sealing insert, made from elastic sealing material with rings which can be separated out, for sealing cable entries in the case of cable joints, a plurality of sealing discs (2) provided on one side with fitting embossments (6) running concentrically around the entry openings (4) being mutually arranged one above another in the entry opening (10) of the cable joint (9), and it being possible for these sealing discs (2) to be deformed by means of pressure elements (18, 27) such that they can be pressed in a sealing fashion against the wall of the entry opening (10) of the cable joint (9) and against the inserted cable, and a radial cut (5) being arranged in each sealing disc (2), and that the radial cuts (5) of the sealing discs (2) situated one above another are mutually offset, characterized in that two sealing discs (2) are connected to one another to form a unit in the same plane via a common connecting web (3) for the purpose of sealing a multiple entry for uncut cables, and in that the sealing discs (2) are connected to one another by film hinges (8) such that when they are folded together the mutual layering of the sealing discs (2) one above the another results.

2. Sealing insert according to Claim 1, characterized in that the concentric fitting embossments (6) are interrupted by a radial web (7) in each case in the region of and to both sides of the radial cut (5).

3. Sealing insert according to one of the preceding claims, characterized in that the sealing disc (2) is mounted with a bearing ring (16) on a circumferential step (12) inside the entry opening (10) of the cable joint, and in that the sealing stack comprising a plurality of sealing discs (2) situated one above another is covered by pressure distributing elements (14, 23).

4. Sealing insert according to one of the preceding claims, characterized in that a cylindrical pressure element (18), which is preferably provided with integrated cable clamping elements (20, 21), can be screwed onto the sealing stack, covered by the pressure distributing element (14), made from a plurality of sealing discs (2) situated one above another, in the outer region (10a), provided with a thread, of the cable entry opening (10) of the cable joint (9).

5. Sealing insert according to one of Claims 1 to 3, characterized in that the sealing stack consisting of a plurality of sealing discs (2) situated one above another can be pressed in sealingly with the aid of a pressure plate (27) acting on the pressure distributing element (21), screwing elements (28) being arranged for producing pressure.

6. Sealing insert according to Claim 5, characterized in that the pressure distributing element (23) is provided with a stop (26) limiting the pressure force.

7. Sealing insert according to one of the preceding claims, characterized in that the bearing rings (16), inserted into the cable entry opening (10), of the pressure distributing elements (14, 23) have radial cuts (17).

8. Sealing insert according to one of the preceding claims, characterized in that in the case of double seals (1), the pressure distributing elements (14, 23) are formed in each case from two individual rings (16, 24) and a common connecting web (15, 25).

9. Sealing insert according to one of the preceding claims, characterized in that the sealing discs (2-3) are formed from elastic material, preferably from silicone.

10. Sealing insert according to one of Claims 1-8, characterized in that the sealing discs (2) are partially formed from plastic material, preferably from a plastic/elastic butyl mixture.

11. Sealing insert according to one of the preceding claims, characterized in that the individual elastic sealing discs are coated with plastic sealing material.

## Revendications

1. Joint d'étanchéité, composé d'un matériau élastique avec des anneaux détachables, destiné à assurer l'étanchéité des entrées de câbles sur les boîtes de jonction, plusieurs disques d'étanchéité (2), munis d'un côté de profils ou d'empreintes d'adaptation (6) qui se développent concentriquement autour des ouvertures d'introduction (4), étant disposées en alternance l'une au-dessus de l'autre dans l'ouverture d'introduction (10) de la boîte de jonction (9), ces disques d'étanchéité (2) pouvant se déformer sous l'effet d'éléments de compression (18, 27) de telle sorte qu'elles sont appliquées, pour assurer l'étanchéité, contre la paroi de l'ouverture d'introduction (10) de la boîte de jonction (9) et contre le câble introduit, une fente radiale (5) étant ménagée dans chaque bague d'étanchéité (2) et les fentes radiales (5) des disques d'étanchéité (2) qui se trouvent l'un au-dessus de l'autre étant décalées l'une par rapport à l'autre
**caractérisé par le fait**
que deux disques d'étanchéité (2) sont reliés l'un à l'autre, dans un même plan, par l'intermédiaire d'une traverse commune (3), pour former une unité, en vue d'assurer l'étanchéité d'une introduction multiple pour câbles non coupés, par le fait que les disques d'étanchéité (2) sont reliés l'un à l'autre par des charnières minces (8) de telle sorte que, lorsqu'on les plie, il en résulte un empilement alterné des disques d'étanchéité (2).

2. Joint d'étanchéité selon la revendication 1
**caractérisé par le fait**
que les profils d'adaptation concentriques (6) sont interrompus respectivement dans la zone de la fente radiale (5) et de ses deux côtés par une traverse radiale (7).

3. Joint d'étanchéité selon une des revendications précédentes
**caractérisé par le fait**
que le disque d'étanchéité (2) est placé, avec une bague d'appui (16), sur un gradin (12) qui se développe sur tout le pourtour à l'intérieur de l'ouverture d'introduction (10) de la boîte de jonction, par le fait que le paquet de joints composé de plusieurs disques d'étanchéité (2) placés les uns sur les autres est recouvert par des élément de répartition de la pression (14, 23).

4. Joint d'étanchéité selon une des revendications précédentes
**caractérisé par le fait**
que, sur le paquet d'étanchéité composé de plusieurs disques d'étanchéité (2), placés les uns sur les autres, et recouvert par l'élément de répartition de la pression (14), un élément de compression cylindrique (18), qui est avantageusement muni d'éléments intégrés de retenue du câble (20, 21), peut être vissé dans la zone extérieure (10a), dûment taraudée, de l'ouverture d'introduction des câbles (10) de la boîte de jonction (9).

5. Joint d'étanchéité selon l'une des revendications 1 à 3
**caractérisé par le fait**
que le paquet d'étanchéité composé de plusieurs disques d'étanchéité (2), placés les uns sur les autres, peut être compressé, pour le rendre étanche, par une plaque d'appui (27) qui agit sur l'élément de répartition de la pression (21), des éléments vissés (28) étant mis en place pour créer la pression.

6. Joint d'étanchéité selon la revendication 5
**caractérisé par le fait**
que l'élément de répartition de la pression (23) est muni d'une butée (26) destinée à limiter la force de pression.

7. Joint d'étanchéité selon l'une des revendications précédentes
**caractérisé par le fait**
que les bagues d'appui (16) des élément de répartition de la pression (14, 23), mises en place dans l'ouverture d'introduction des câbles (10), comportent des fentes radiales (17).

8. Joint d'étanchéité selon l'une des revendications précédentes
**caractérisé par le fait**
que les élément de répartition de la pression (14, 23) sont formés, dans le cas de joints doubles (1), de deux bagues distinctes (16, 24) et d'une traverse commune (15, 25).

9. Joint d'étanchéité selon l'une des revendications précédentes
**caractérisé par le fait**
que les disques d'étanchéité (2 - 3) sont formés d'un matériau élastique, de préférence de silicone.

10. Joint d'étanchéité selon l'une des revendications 1 à 8
**caractérisé par le fait**
que les disques d'étanchéité (2) sont formés partiellement d'un matériau plastique, de préférence d'un mélange butyle plasto-élastique.

11. Joint d'étanchéité selon l'une des revendications précédentes
**caractérisé par le fait**
que les différents disques d'étanchéité élastiques sont recouverts d'une couche de matériau plastique d'étanchéité.
